# EUROPÄISCHE PATENTSCHRIFT

(11) **EP 1 196 037 B1**
(45) Veröffentlichungstag und Bekanntmachung des Hinweises auf die Patenterteilung: **28.04.2004**
(21) Anmeldenummer: 00942124.9
(22) Anmeldetag: 23.06.2000
(51) Int. Cl.: A22C 11/10

(54) **ABTEILVORRICHTUNG FÜR UNTERTEILBARES FÜLLGUT IN EINER FLEXIBLEN SCHLAUCHHÜLLE**
DEVICE FOR STUFFING PORTIONABLE STUFFING MATERIAL INTO A FLEXIBLE CASING
DISPOSITIF DE SEGMENTATION POUR PRODUIT DE REMPLISSAGE DIVISIBLE DANS UNE GAINE TUBULAIRE FLEXIBLE

(30) Priorität: 26.07.1999 DE 19934154
(43) Veröffentlichungstag der Anmeldung: 17.04.2002
(73) Patentinhaber: Poly-clip System GmbH & Co. KG, 60489 Frankfurt am Main (DE)
(72) Erfinder: TÖPFER, Klaus, D-64572 Büttelborn (DE); VERMEHREN, Günter, D-61250 Usingen (DE)
(74) Vertreter: Eisenführ, Speiser & Partner
(86) Internationale Anmeldenummer: PCT/EP2000/005842
(87) Internationale Veröffentlichungsnummer: WO 2001/006859

(56) Entgegenhaltungen:
- EP-A- 0 507 374
- CH-A- 170 301
- DE-A- 2 550 042
- DE-C- 117 817
- DE-C- 19 606 654
- DE-U- 1 882 434
- FR-A- 1 557 553
- US-A- 5 087 463
- US-A- 5 495 707

## Beschreibung

Die Erfindung betrifft eine Abteilvorrichtung für unterteilbares Füllgut in einer flexiblen Schlauchhülle, mit einander überlappend und symmetrisch zur Schlauchachse gegeneinander schwenkbaren Einschnürelementen, welche gemeinsam eine größenveränderliche Öffnung umschreiben und durch Verkleinern der Öffnung den gefüllten Schlauch einschnüren, wobei die Einschnürelemente aus Leisten bestehen, die mit ihren einen Enden auf einem zur Schlauch- und Öffnungsachse konzentrischen Kreis mit gleichen Abständen ortsfest schwenkbar gelagert sind, während ihre anderen Endbereiche in einem ebenfalls zur Schlauch- und Öffnungsachse konzentrischen und um diese begrenzt drehbaren Ring derart geführt sind, daß sie sich kreissehnenartig im Teilkreis ihrer Schwenklager erstrecken und dem Ring gegenüber sowohl Schwenk- als auch Längsbewegungen in ihrer Hauptebene ausführen können.

Eine derartige Abteilvorrichtung namentlich zum Abteilen von Einzelwürsten aus einem Wurststrang ist aus der DE 196 06 654 C1 bekannt. Dort sind mindestens vier Leisten als Einschnürelemente vorgesehen, die sich in jeder Öffnungs- bzw. Schließstellung stets paarweise parallel erstrecken und ein Quadrat (jeweils unterschiedlicher Größe) umschreiben. Ungeachtet ihrer guten Brauchbarkeit hat sich beim Betrieb dieser bekannten Vorrichtung gezeigt, daß eine quadratische Einschnüröffnung insbesondere bei Schlauchpackungen großen Durchmessers zu Problemen bei der Bildung des Einschnürzopfes an der Schlauchhülle führen kann; auch wenn die Bewegung aller vier Leisten beim Einschnüren wegen der geringeren Scher-Relativbewegungen zwischen der Schlauchhülle und den Einschnürelementen eine deutliche Verbesserung gegenüber den herkömmlichen Abteilvorrichtungen mit zwei linear oder schwenkbar gegeneinander beweglichen Einschnürelementen mit zwei im allgemeinen rechtwinklig zueinander verlaufenden Wirkflächen darstellte (DE 36 10 010 A1, DE 25 50 042 A1).

Der Erfindung liegt die Aufgabe zugrunde, unter Beibehaltung verringerter Scherbewegungen oder sogar deren weiterer Verringerung die Zopfbildung beim Schließvorgang der Abteilvorrichtung - namentlich bei Schlauchpackungen größeren Durchmessers - zu verbessern. Diese Aufgabe wird erfindungsgemäß dadurch gelöst, daß mindestens drei Einschnürelemente vorgesehen sind, deren der Öffnung zugewandte Wirkflächen in der Hauptebene geknickt oder gekrümmt sind. Auf diese Weise wird der Öffnung eine der mehr oder minder idealen Kreisform des schließlich entstehenden Schlauchhüllen-Zopfes - der regelmäßig mittels ebenfalls im wesentlichen kreisförmigen Verschlußklammern dauerhaft fixiert und verschlossen wird - näherkommende Form gegeben, wobei zugleich die, über den Umfang verteilt, größere Zahl von Wirkflächenabschnitten an den Einschnürelementen das radiale Einschnüren der Schlauchhülle zur Schlauch- und Öffnungsachse hin begünstigt, so daß Scherbewegungen zwischen der Schlauchhülle und den Einschnürelementen nahezu vollständig entfallen.

Die vorteilhafte Wirkung dieser Ausbildung und Anordnung der Einschnürelemente, welche im Gegensatz zu bekannten Abteilvorrichtungen mit schwenkbaren sowie mehreren, zueinander winklig verlaufenden Wirkflächen versehenen Einschnürelementen nicht um ein und dieselbe Achse, sondern um mehrere, am Umfang verteilte Achsen schwenkbar sind, wird weiter gefördert, wenn die Knickung bzw. Krümmung der Einschnürelemente stumpfwinklig ist.

Im allgemeinen bestehen die Einschnürelemente aus (im Vergleich zu ihrer Breite) relativ dünnwandigem Blech. Daher ist in Weiterbildung der Erfindung vorgesehen, daß die Einschnürelemente aus ihrer (ursprünglichen) Hauptebene entlang einer radial zur Schlauch- und Öffnungsachse verlaufenden Linie um im wesentlichen die Dicke der Einschnürelemente doppelt (Z-förmig) abgekröpft sind. Auf diese Weise können alle Einschnürelemente in jeweils derselben Ebene angelenkt werden, so daß keine Verstaffelung parallel zur Schlauch- und Öffnungsachse erforderlich ist. Allerdings ist die Ebene der jeweils einen Schwenkachse aller Einschnürelemente gegenüber der Ebene der jeweils anderen Schwenkachse parallel zur Schlauch- und Öffnungsachse versetzt, so daß die beim Einschnürvorgang an der Schlauchhülle angreifenden Wirkflächen in Umfangsrichtung abwechselnd in der einen und der anderen Ebene liegen. Aber es ist von erheblichem Vorteil, daß auch bei drei, vier oder gar mehr Elementen nur zwei aneinandergrenzende Ebenen von den Einschnürelementen belegt sind und damit die Gesamtdicke der Abteilvorrichtung im wesentlichen nur der doppelten Dicke der Einschnürelemente entspricht.

Wenn die erfindungsgemäße Abteilvorrichtung Teil eines Spreizverdrängers ist, der zwei Sätze von Einschnürelementen aufweist, welche im Schließzustand in axialen Abstand voneinander verschiebbar sind, können vorteilhaft die Einschnürelemente des zweiten Satzes gegenüber den des ersten Satzes um ein Viertel des Abstandswinkels benachbarter Elemente um die Schlauch- und Öffnungsachse gegeneinander versetzt sein. Das 'rundet' die umschriebene Öffnung weiter aus, und es ist beispielsweise möglich, insgesamt vier Einschnürelemente auf zwei Sätze von je zwei Einschnürelementen zu verteilen, ohne zu den Nachteilen des Standes der Technik (DE 36 10 010 A1, DE 25 50 042 A1) zurückzukehren.

Bei einem Spreizverdränger der vorstehend angesprochenen Art können ferner die beiden Sätze von Einschnürelementen während des Spreizvorganges synchron miteinander oder gegeneinander dreh- und antreibbar sein, um auf diese Weise die Zopfbildung noch weiter zu verbessern. Darüber hinaus kann es sinnvoll sein, die beiden Sätze von Einschnürelementen zeitlich nacheinander zu schließen, um das Nachziehen von Schlauchmaterial zu gewährleisten und dadurch zu verhindern, daß das Schlauchmaterial im Einschnürbereich überbeansprucht wird.

Die Zeichnungen veranschaulichen die Erfindung an Ausführungsbeispielen. Darin zeigt:
- Fig. 1: eine Draufsicht auf eine erfindungsgemäße Abteilvorrichtung im geöffneten Zustand;
- Fig. 2: die Abteilvorrichtung der Fig. 1 im geschlossenen Zustand;
- Fig. 3: einen Schnitt durch einen Spreizverdränger mit zwei deckungsgleich nebeneinander angeordneten Abteilvorrichtungen der in Fig. 1 gezeigten Ausbildung;
- Fig. 4: den Spreizverdränger gemäß Fig. 3 im geschlossenen und gespreizten Zustand;
- Fig. 5: in Draufsicht einen Spreizverdränger aus zwei gegeneinander verdrehten Abteilvorrichtungen (Sätzen von Einschnürelementen) der in Fig. 1 gezeigten Ausbildung (geöffnet);
- Fig. 6: den Spreizverdränger der Fig. 5 im Schnitt;
- Fig. 7: den Spreizverdränger der Fig. 5 im geschlossenen Zustand;
- Fig. 8: den Spreizverdränger gemäß Fig. 7 im gespreizten Zustand;
- Fig. 9: eine andere Ausführungsform der erfindungsgemäßen Vorrichtung mit insgesamt vier Einschnürelementen in Form zweier Sätze (Abteilvorrichtungen) mit je zwei Einschnürelementen, welche um den halben Abstandswinkel - analog Fig. 5 - gegeneinander verdreht sind (geöffnet);
- Fig. 10: die Vorrichtung gemäß Fig. 9 im Schnitt;
- Fig. 11: die Vorrichtung gemäß Fig. 9 im geschlossenen Zustand; und
- Fig. 12: die Vorrichtung gemäß Fig. 9 im Betriebszustand der Fig. 11 in der Spreizlage.

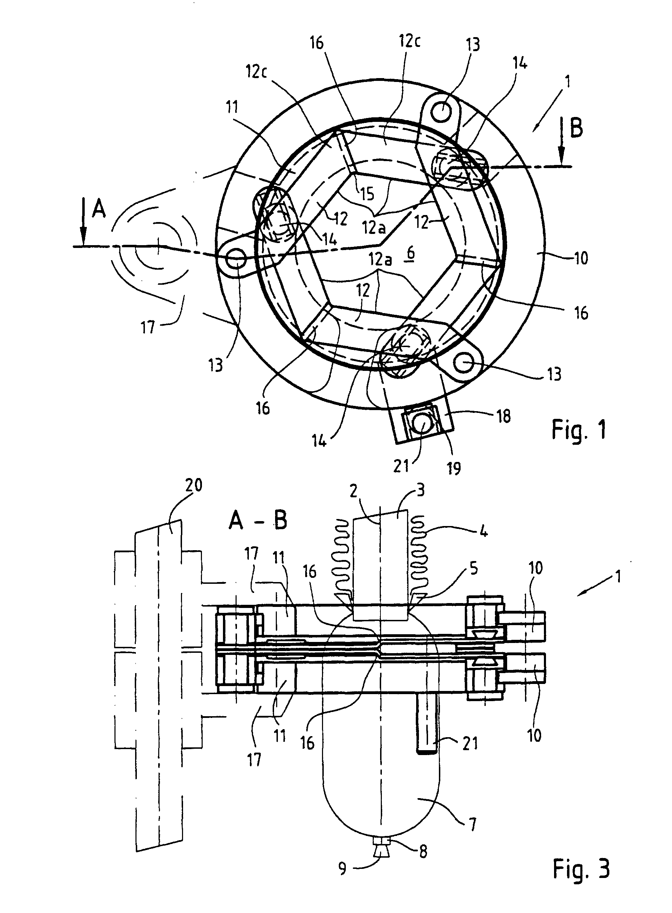

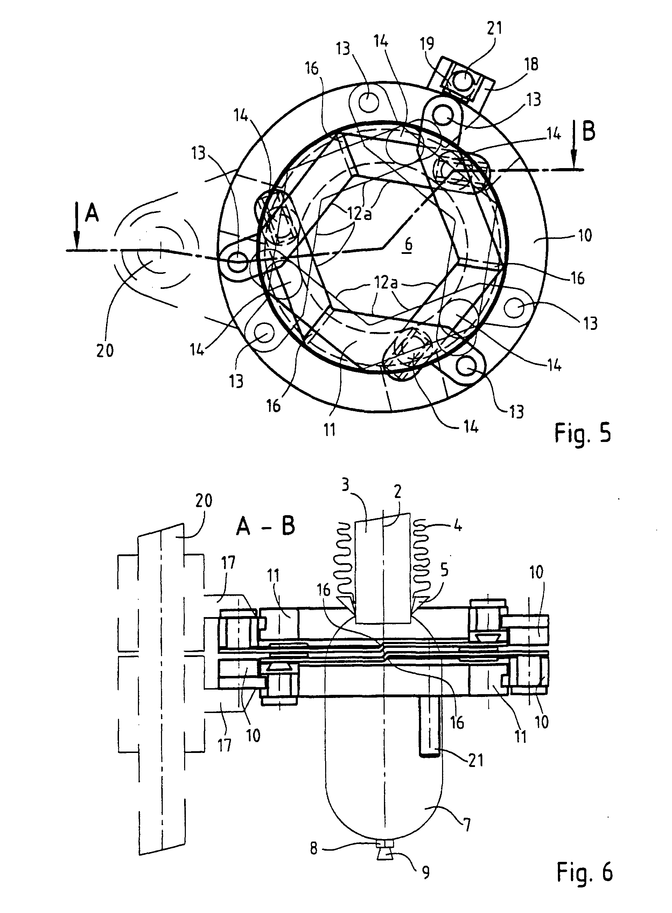

Die Abteilvorrichtung 1 in Fig. 1 ist - wie Fig. 3 veranschaulicht - konzentrisch zur Achse 2 eines Füllrohres 3 einer (im übrigen nicht dargestellten) Füllmaschine zur Herstellung von aufeinanderfolgenden einzelnen Würsten aus einem gefüllten Wurststrang angeordnet. Auf dem Füllrohr 3 befindet sich ein Vorrat an Schlauchhülle 4, welche beim Füllvorgang durch eine Darmbremse 5 hindurch abgezogen wird. Die Achse 2 des Füllrohres stellt zugleich die Achse der Schlauchhülle 4 und der Öffnung 6 der Abteilvorrichtung 1 dar. Fig. 3 zeigt ferner den gefüllten Wurststrang 7, der an seinem in Füllrichtung vorderen Ende durch einen Clip 8 um den Zopf 9 verschlossen ist.

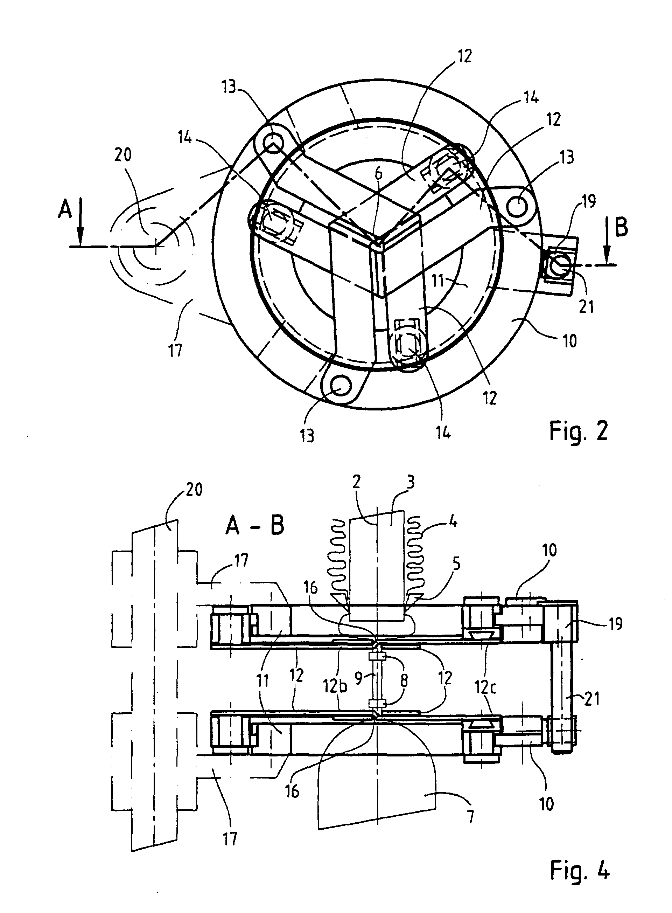

Die Füllung des Wurststranges wird durch die - gemäß Fig. 1 und 3 geöffnete - Abteilvorrichtung hindurch solange fortgesetzt, bis die gewünschte Portionsgröße erreicht ist. Dann wird die Abteilvorrichtung in die in Fig. 2 dargestellte Schließlage gebracht und - im Falle eines Spreizverdrängers gemäß Fig. 4 - in die dort dargetellte Spreizlage verschoben, wobei Schlauchhülle 4 vom Füllrohr 3 nachgezogen wird. In der Spreizstellung werden auf den von der geschlossenen Abteilvorrichtung gebildeten und beim Spreizen verlängerten Zopf 9 zwei Clips 8 gesetzt, worauf zwischen diesen der Zopf 9 aufgetrennt werden kann.

Die Abteilvorrichtung gemäß Fig. 1 weist einen Außenring 10 und einen darin konzentrisch geführten Innenring 11 auf. Drei Einschnürelemente 12 sind mit ihren jeweils einen Enden bei 13 am Außenring 10 schwenkbar gelagert, während ihre anderen Enden mittels einer kombinierten Kulissenstein- und Achsführung 14 am Innenring 11 ebenfalls schwenkbar sowie in geringem Umfange längsverschieblich gelagert sind.

Die Einschnürelemente 1 2 bestehen aus Flachleisten, die im Beispiel der Fig. 1 bis 4 bei 15 stumpfwinklig (120°) geknickt sind, so daß sich aus den drei Einschnürelementen mit je zwei Wirkflächen 12a eine gleichschenklige Sechseck-Öffnung 6 ergibt. Darüber hinaus sind die Einschnürelemente 12 jeweils entlang einer von der Achse 2 radial durch den Knickpunkt 15 gehenden Linie doppelt abgekröpft; die Abkröpfung 16 führt zu einem Versatz der beiden Abschnitte 12b und 12c jedes Einschnürelements 12 um etwa die Blechdicke des Einschnürelements in Richtung der Achse 2 (Fig. 3).

Der Außenring 10 ist an einer nur angedeuteten Halterung 17 und über diese an der Füllmaschine mit dem Füllrohr 3 befestigt. Eine Anlenkung 18 dient zum Verdrehen des Innenrings 11 gegenüber dem Außenring 10. Mit Hilfe eines einstellbaren Exzenters 19 kann die Grundeinstellung zwischen den beiden Ringen 10, 11 und damit die Größe der Öffnung 6 bei jeweils gleicher Relativstellung der Ringe 10, 11 zueinander verändert werden.

Im Falle der Verdoppelung der Abteilvorrichtung 1 zu einem Spreizverdränger wird die lineare Spreizbewegung der beiden Abteilvorrichtungen 1 (Sätze von Einschnürelementen 1 2) durch die zur Halterung 17 gehörende Stange 20 und eine mit dem Exzenter 19 versehene Stange 21 (welche der Stange 20 diametral gegenüberliegt) ermöglicht.

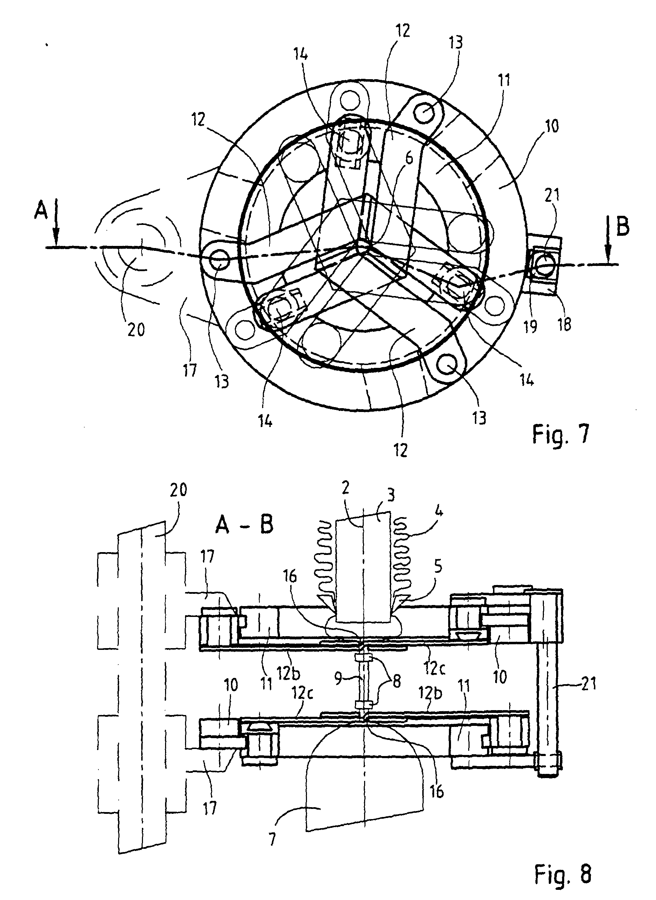

Der in den Fig. 5 - 8 dargestellte Spreizverdränger besteht ebenfalls - wie der Spreizverdränger gemäß den Fig. 3, 4 - aus zwei Abteilvorrichtungen 1 gemäß den Fig. 1 und 2, jedoch sind die beiden Abteilvorrichtungen (Sätze von Einschnürelementen 12) um ein Viertel des Abstandswinkels benachbarter Elemente 12 um die Schlauch- und Öffnungsachse 2 gegeneinander versetzt, im dargestellten Fall also um 30°. Um dies zu verdeutlichen, sind in Fig. 5 die Einschnürelemente der einen Abteilvorrichtung gegenüber denen der anderen Abteilvorrichtung mit unterschiedlich dicken Linien dargestellt. Fig. 7 macht deutlich, daß insbesondere im geschlossenen Zustand des Spreizverdrängers die Öffnung 6 der angestrebten Kreisform stark angenähert ist, obgleich die Wirkflächen der (geknickten) Einschnürelemente 12 linear berandet sind.

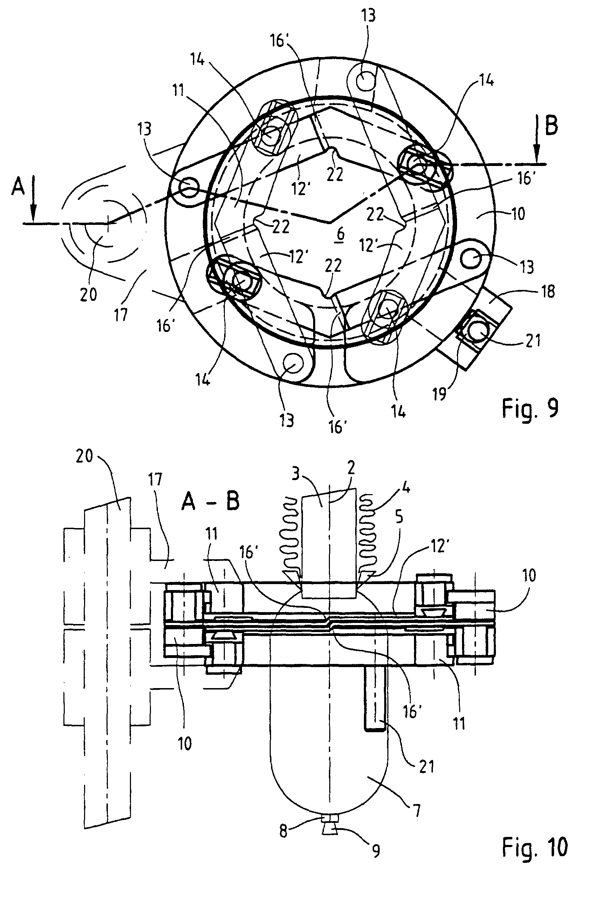

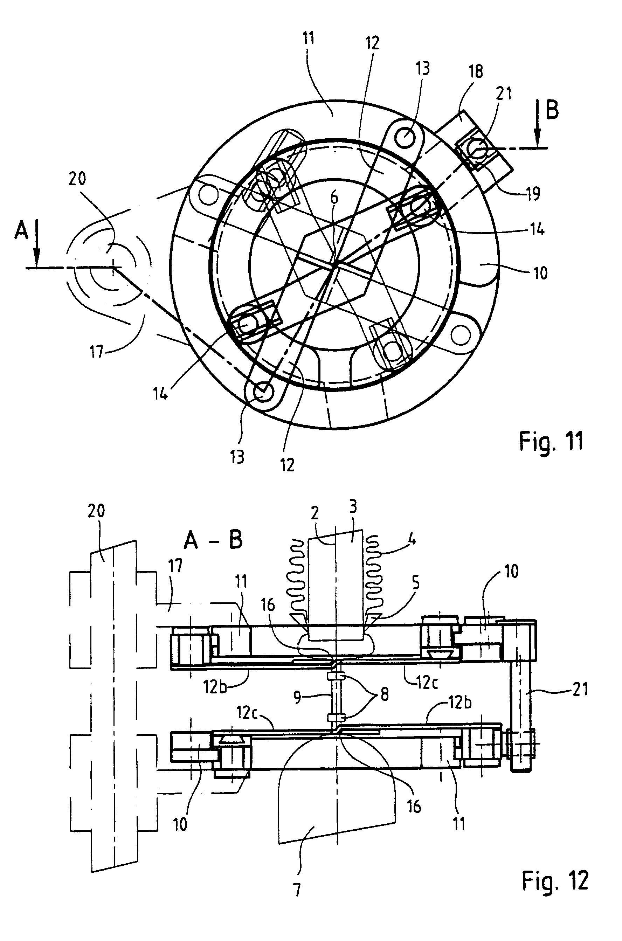

Entsprechendes gilt für den Spreizverdränger gemäß den Fig. 9 - 12, der mit insgesamt vier Einschnürelementen 12' auskommt, welche zu je zwei Elementen auf die beiden Sätze der einzelnen, um 90° gegeneinander verdrehten Abteilvorrichtungen verteilt sind. Auch die Einschnürelemente 12' sind geknickt, haben jedoch zusätzlich Ausnehmungen 22 im Bereich der Knicklinie 15', und auch die Linie 16 der doppelten Abkröpfung verläuft nicht radial bezüglich der Achse 2, sondern in einem versetzten Winkel zu dieser. Diese Maßnahmen führen trotz der geringen Gesamtzahl von Einschnürelementen 12' zu einer ausreichend ausgerundeten Öffnung 6' im geschlossenen Zustand (Fig. 11) bei ebenfalls noch ausreichend geringer Scherbewegung zwischen der Schlauchhülle 4 und den Wirkflächen (12a') der Einschnürelemente 12'.

## Patentansprüche

1. Abteilvorrichtung für unterteilbares Füllgut in einer flexiblen Schlauchhülle, mit einander überlappend und symmetrisch zur Schlauchachse gegeneinander schwenkbaren Einschnürelementen, welche gemeinsam eine größenveränderliche Öffnung umschreiben und durch Verkleinern der Öffnung den gefüllten Schlauch einschnüren, wobei die Einschnürelemente aus Leisten bestehen, die mit ihren einen Enden auf einem zur Schlauchachse konzentrischen Kreis mit gleichen Abständen ortsfest schwenkbar gelagert sind, während ihre anderen Endbereiche in einem ebenfalls zur Schlauchachse konzentrischen und um diese begrenzt drehbaren Ring derart geführt sind, daß sie sich kreissehnenartig im Teilkreis ihrer Schwenklager erstrecken und dem Ring gegenüber sowohl Schwenk- als auch Längsbewegungen in ihrer Hauptebene ausführen können,
**dadurch gekennzeichnet, daß** mindestens drei Einschnürelemente (12) vorgesehen sind, deren der Öffnung (6) zugewandte Wirkflächen (12a) in der Hauptebene geknickt (15) oder gekrümmt sind.

2. Abteilvorrichtung nach Anspruch 1,
**dadurch gekennzeichnet, daß** die Knickung bzw. Krümmung stumpfwinklig ist.

3. Abteilvorrichtung nach Anspruch 1 oder 2,
**dadurch gekennzeichnet, daß** die Einschnürelemente (12; 12') aus ihrer Hauptebene entlang einer radial zur Schlauch- und Öffnungsachse (2) verlaufenden Linie (16) um im wesentlichen die Dicke der Einschnürelemente (12) doppelt abgekröpft sind.

4. Abteilvorrichtung nach einem der vorhergehenden Ansprüche mit zwei Sätzen von Einschnürelementen, die im Schließzustand in axialen Abstand voneinander verschiebbar sind
**dadurch gekennzeichnet, daß** die Einschnürelemente (12; 12') des zweiten Satzes gegenüber denen des ersten Satzes um einen Teil des Abstandswinkels benachbarter Elemente (12) um die Schlauch- und Öffnungsachse (2) gegeneinander versetzt sind.

5. Abteilvorrichtung nach Anspruch 4,
**dadurch gekennzeichnet, daß** insgesamt vier Einschnürelemente (12') auf zwei Sätze aus je zwei Einschnürelementen verteilt und diese um den halben Abstandswinkel (90°) der jeweils beiden Elemente um die Schlauch- und Öffnungsachse (2) gegeneinander versetzt sind.

6. Abteilvorrichtung nach einem der vorhergehenden Ansprüche mit zwei Sätzen von Einschnürelementen, die im Schließzustand in axialen Abstand voneinander verschiebbar sind
**dadurch gekennzeichnet, daß** die beiden Sätze von Einschnürelementen (12; 12') während des Spreizvorganges synchron miteinander oder gegeneinander dreh- und antreibbar sind.

7. Abteilvorrichtung nach Anspruch 4 oder 6,
**dadurch gekennzeichnet, daß** die beiden Sätze von Einschnürelementen (12; 12') zeitlich nacheinander schließbar sind.

## Claims

1. Dividing-off arrangement for dividable filling material in a flexible tubular outer, having constricting members which can be pivoted towards one another symmetrically to the axis of the tube and with an overlap with one another and which together define an opening of variable size and constrict the filled tubular outer by making the opening smaller, the constricting members comprising strips which, at one end, are mounted, at equal intervals on a circle concentric with the axis of the tube, to pivot at a fixed point, while their other end regions are guided, in a ring which is likewise concentric with the axis of the tube and can be rotated thereabout to a limited extent, in such a way that the strips extend like chords of the pitch circle of their pivot mountings and can perform both pivoting movements and longitudinal movements relative to the ring in their principal plane, **characterised in that** at least three constricting members (12) are provided, whose working faces (12a) adjacent the opening (6) are angled (15) or curved in the principal plane.

2. Dividing-off arrangement according to claim 1, **characterised in that** the angling or curvature is at an obtuse angle.

3. Dividing-off arrangement according to claim 1 or 2, **characterised in that**, from their principal plane along a line extending radially to the axis (2) of the tube and opening, the constricting members (12; 12') are offset twice by substantially the thickness of the constricting members.

4. Dividing-off arrangement according to one of the foregoing claims having two sets of constricting members which, in the closed state, can be displaced from one another to an axial spacing, **characterised in that** the constricting members (12; 12') forming the second set are offset about the axis (2) of the tube and opening from those forming the first set by part of the angle at which adjacent members are spaced apart.

5. Dividing-off arrangement according to claim 4, **characterised in that** a total of four constricting members (12') are divided into two sets each comprising two constricting members and these sets are offset from one another about the axis (2) of the tube and opening by half (90°) the angle at which the two members in each set are spaced apart.

6. Dividing-off arrangement according to one of the foregoing claims having two sets of constricting members which, in the closed state, can be displaced from one another to an axial spacing, **characterised in that** the two sets of constricting members (12, 12') can be driven and rotated in or out of synchronisation with one another

7. Dividing-off arrangement according to claim 4 or 6, **characterised in that** the two sets of constricting members (12; 12') can be closed at successive times.

## Revendications

1. Dispositif de division pour un produit de remplissage divisible dans une gaine tubulaire flexible, comportant des éléments de serrage qui peuvent basculer de façon à se chevaucher l'un l'autre et de façon symétrique par rapport à l'axe de gaine et qui circonscrivent ensemble une ouverture de taille modifiable et serrent la gaine remplie en rétrécissant l'ouverture, les éléments de serrage se composant de réglettes qui par l'une de leurs extrémités sont montées à demeure, de façon à pouvoir basculer, selon des intervalles égaux sur un cercle concentrique à l'axe de la gaine et de l'ouverture, tandis que leurs autres zones terminales sont guidées dans un anneau, également concentrique à l'axe de la gaine et de l'ouverture, qui peut tourner autour de cet axe de façon limitée de telle manière qu'ils s'étendent en corde de cercle dans l'arc de cercle de leur palier pivotant et peuvent exécuter par rapport à l'anneau aussi bien des mouvements pivotants que longitudinaux dans leur plan principal,
**caractérisé en ce que** l'on prévoit au moins trois éléments de serrage (12) dont les surfaces actives (12a) orientées vers l'ouverture (6) sont repliées (15) ou recourbées dans le plan principal.

2. Dispositif de division selon la revendication 1, **caractérisé en ce que** la pliure ou la courbure fait un angle obtus.

3. Dispositif de division selon la revendication 1 ou 2, **caractérisé en ce que**, à partir de leur plan principal, les éléments de serrage (12, 12') sont coudés deux fois pratiquement de l'épaisseur des éléments de serrage (12) le long d'une ligne (16) qui s'étend radialement par rapport à l'axe de la gaine et de l'ouverture (2).

4. Dispositif de division selon l'une des revendications précédentes, équipé de deux ensembles d'éléments de serrage qu'à l'état fermé on peut déplacer l'un par rapport à l'autre selon un écart axial, **caractérisé en ce que**, par rapport à ceux du. premier ensemble, les éléments de serrage (12 ; 12') du deuxième ensemble sont décalés l'un par rapport à l'autre autour de l'axe de la gaine et de l'ouverture d'une partie de l'angle d'écartement entre des éléments voisins (12).

5. Dispositif de division selon la revendication 4, **caractérisé en ce qu'**au total quatre éléments de serrage (12') sont répartis en deux ensembles composés chacun de deux éléments de serrage et que ceux-ci sont décalés l'un par rapport à l'autre autour de l'axe de la gaine et de l'ouverture (2) de la moitié de l'angle d'écartement (90°) ente les deux éléments respectifs.

6. Dispositif de division selon l'une des revendications précédentes, équipé de deux ensembles d'éléments de serrage qu'à l'état fermé on peut déplacer l'un par rapport à l'autre selon un écart axial,
**caractérisé en ce que** les deux ensembles d'éléments de serrage (12 ; 12') peuvent être poussés ou tournés en même temps dans le même sens ou en sens contraire pendant l'opération d'écartement.

7. Dispositif de division selon la revendication 4 ou 6, **caractérisé en ce que** les deux ensembles d'éléments de serrage (12 ; 12') peuvent être fermés l'un après l'autre dans le temps.
